# EUROPEAN PATENT APPLICATION

(11) **EP 4 491 990 A1**
(43) Date of publication of application: **15.01.2025**
(21) Application number: 23803843.4
(22) Date of filing: 10.05.2023
(51) Int. Cl.: F27B 7/42, F27B 7/32, F27B 7/33, F27B 7/22, G01K 1/14, F27B 7/08, F27D 21/00, F27D 19/00

(54) **ROTARY KILN**

(30) Priority: 10.05.2022 KR 20220057237; 17.05.2022 KR 20220060126; 19.05.2022 KR 20220061554; 08.06.2022 KR 20220069410; 09.05.2023 KR 20230059992
(71) Applicant: LG Chem, Ltd., Yeongdeungpo-gu Seoul 07336 (KR)
(72) Inventor: YOON, Jong Seol, Daejeon 34122 (KR); RYOO, Chang Seok, Daejeon 34122 (KR); NHO, Jun Seok, Daejeon 34122 (KR)
(74) Representative: Hoffmann Eitle
(86) International application number: PCT/KR2023/006363
(87) International publication number: WO 2023/219420

(57) **Abstract**

A rotary kiln according to the present invention includes: a tube assembly provided with a rotating tube configured to rotate and heat raw material powder while rotating in a horizontally disposed state; and a temperature measuring part provided in the rotating tube, wherein the temperature measuring part includes: a first temperature sensor; a first fixing member configured to fix the first temperature sensor to the rotating tube; and an insulator provided between the first fixing member and the rotating tube to block heat of the rotating tube from being conducted to the first temperature sensor.

## Description

### TECHNICAL FIELD

### CROSS-REFERENCE TO RELATED APPLICATION

The present application claims the benefit of the priority of Korean Patent Application Nos. 10-2022-0057237, filed on May 10, 2022, 10-2022-0060126, filed on May 17, 2022, 10-2022-0061554, filed on May 19, 2022, 10-2022-0069410, filed on June 08, 2022, and 10-2023-0059992, filed on May 09, 2023, which are hereby incorporated by reference in their entirety.

### TECHNICAL FIELD

The present invention relates to a rotary kiln capable of directly measuring a temperature of a tube assembly and a temperature of raw material powder heated while rotating by the tube assembly.

### BACKGROUND ART

In general, secondary batteries refer to chargeable and dischargeable batteries, unlike primary batteries that are not chargeable. The secondary batteries are being widely used in the high-tech electronic fields such as mobile phones, notebook computers, and camcorders.

Particularly, as technology development and demands for, mobile devices increase, the demands for secondary batteries as energy sources are rapidly increasing. Among these secondary batteries, a lithium secondary battery having a high energy density and voltage, a long cycle life, and a low self-discharge rate has been commercialized and widely used.

In the lithium secondary battery, lithium transition metal oxide is used as a positive electrode active material. That is, lithium cobalt oxide having a high operating voltage and excellent capacity characteristics, lithium nickel oxide having a high reversible capacity of about 200 mAh/g and easy implementation of large-capacity batteries, lithium nickel cobalt oxide in which a portion of nickel is substituted with cobalt, lithium nickel cobalt metal oxide in which a portion of nickel is substituted with manganese, cobalt or aluminum, low-cost lithium manganese oxide having excellent thermal stability, lithium iron phosphate having excellent stability, and the like are being used as the positive electrode active material.

The positive electrode active material is prepared by mixing a precursor for producing the positive electrode active material with the lithium raw material and then putting the mixture into a heating device to perform sintering at a high temperature.

Here, a rotary kiln may be applied as the heating device.

The rotary kiln includes a rotating tube accommodating a precursor for producing a positive electrode active material and a lithium row material (hereinafter, referred to as a raw material powder) and rotating the above-described materials in a horizontal direction to mix the materials, a heating body provided outside the rotating tube and applying heat to the rotating tube to heat the raw material powder so that the raw material powder reacts, a supply member supplying the raw material powder to the rotating tube, and a collection member collecting the raw material powder discharged from the rotating tube.

The heating body heats the rotating tube and heats the raw material powder through the heated rotating tube. Here, since the heating temperature of the rotating tube and the heating temperature of the raw material powder may not be known, it is difficult to accurately manage the heat, and in particular, there is no method to check whether the raw material powder is heated to a uniform temperature. As a result, there is a problem in that management of uniform quality of the raw material powder is difficult.

### DISCLOSURE OF THE INVENTION

### TECHNICAL PROBLEM

An object of the present invention is to provide a rotary kiln capable of directly measuring a temperature of a tube assembly and a temperature of raw material powder heated while rotating by the tube assembly and capable of more accurately and precisely managing heat during a sintering process to manage quality of the raw material powder.

### TECHNICAL SOLUTION

A rotary kiln sintering raw material powder according to the present invention includes: a tube assembly provided with a rotating tube configured to rotate and heat the raw material powder while rotating in a horizontally disposed state; and a temperature measuring part provided in the rotating tube, wherein the temperature measuring part includes: a first temperature sensor; a first fixing member configured to fix the first temperature sensor to the rotating tube; and an insulator provided between the first fixing member and the rotating tube to block heat of the rotating tube from being conducted to the first temperature sensor.

The first temperature sensor may be provided inside the rotating tube to measure a temperature of the raw material powder.

The first temperature sensor may be configured to measure a temperature distribution in a radial direction of an inner circumference of the rotating tube.

The first fixing member may be provided in a shape surrounding the first temperature sensor.

The first temperature sensor may be provided in plurality, and the first fixing member may include: a pair of horizontal parts provided inside the rotating tube to extend in a longitudinal direction of the rotating tube; and a vertical rod of which both ends are fixed to the pair of horizontal parts, respectively and in which the plurality of first temperature sensors are installed at preset intervals in the radial direction of the inner circumference of the rotating tube.

The temperature measuring part may further include a first coupling member configured to fix the first fixing member to the rotating tube.

The first coupling member may include: a first coupling piece provided inside the rotating tube and coupled to a front end of the first fixing member; a second coupling piece provided with an outer part provided outside the rotating tube and an inner part which is provided between the first fixing member and the insulator and of which a front end is coupled to the first coupling piece; and a pressing piece disposed between the first coupling piece and the second coupling piece and configured to press the first fixing member while being deformed when the first coupling piece and the second coupling piece are coupled to each other.

The rotary kiln may further include an auxiliary temperature measuring part configured to directly measure a temperature of the rotating tube, wherein the auxiliary temperature measuring part may include: a second temperature sensor inserted into an outer surface of the rotating tube, wherein the second temperature sensor is inserted so as not to pass into the tube assembly, thereby measuring the temperature of the rotating tube; and a second fixing member configured to fix the second temperature sensor to the rotating tube.

The rotary kiln may further include: a receiving part configured to receive the temperature measured by the temperature measuring part and the temperature measured by the auxiliary temperature measuring part; and an inspection part configured to generate a defective signal when the temperature of the temperature measuring part and the temperature of the auxiliary temperature measuring part are less than or greater than a set input value.

The rotary kiln may further include a control part configured to control a heating temperature of the rotating tube when the defective signal is generated by the inspection part so as to adjust the heating temperature so that the temperature of the temperature measuring part and the temperature of the auxiliary temperature measuring part are within the set input value.

The plurality of first temperature sensors may be disposed in a radial direction of an inner circumference of the rotating tube to measure a temperature of the raw material powder put into the rotating tube and a temperature of a space in which the raw material powder does not exist, thereby detecting the temperature distribution.

The temperature measuring part may further include a detection member configured to detect a fixing amount of raw material powder put into the rotating tube through the temperature distribution in the radial direction of the inner circumference of the rotating tube, which is detected by the plurality of first temperature sensor, wherein the detection member may be configured to detect the first temperature sensors that detect a temperature of the raw material powder in a state in which the plurality of first temperature sensors are disposed in the radial direction of the rotating tube and select input filling amount data corresponding to the detected number of first temperature sensors so as to calculate a filling amount of the raw material powder.

The rotary kiln may further include a sintering assembly configured to sinter the raw material powder that rotates by the rotating tube, wherein the sintering assembly may include: a sintering part configured to sinter the raw material powder rotating by the rotating tube; and a coupling part configured to couple the sintering part to one end of the rotating tube, wherein the coupling part may include: a ring-shaped support piece which is supported on one end of the rotating tube and to which the sintering part is coupled; and a fixing means configured to detachably couple the support piece to one end of the rotating tube.
the sintering part may include one or more sintering pieces configured to sinter the raw material powder, wherein the sintering pieces may include: two or more rotatable bodies provided at a reset interval; and a sintering rod configured to connect the rotatable bodies corresponding to each other and sinter the raw material powder rotating by the rotating tube.

Each of the rotatable bodies may have a diameter less than that of an inner circumferential surface of the rotating tube so as not to be supported on the inner circumferential surface of the rotating tube.

When two sintering pieces are provided, the sintering part may further include an auxiliary sintering rod configured to connect the sintering pieces corresponding to each other and sinter the raw material powder disposed between the sintering pieces corresponding to each other.

The rotating tube may be made of a clad metal that is integrated by fusing heterogeneous metals.

The heterogeneous metal materials may include a metal material and a non-ferrous metal material.

The heterogeneous metals may include an inner metal material disposed inside the rotating tube and an outer metal material disposed outside the rotating tube, wherein the inner metal material may have a thickness less than that of the outer metal material.

The rotating tube may be provided with an inlet through which the raw material powder is input and an outlet through which the raw material powder is discharged, and the inner metal material may have a thickness that gradually increases from the inlet to the outlet of the rotating tube.

### ADVANTAGEOUS EFFECTS

The rotary kiln according to the first embodiment of the present invention may include the temperature measuring part provided in the rotating tube, and the temperature measuring part may include the first temperature sensor and the first fixing member. Here, the first temperature sensor may directly measure the temperature of the raw material powder. Due to this feature, the temperature of the raw material powder may be accurately measured, and thus, the quality of the raw material powder may be easily performed.

The rotary kiln according to the second embodiment of the present invention may include the temperature measuring part provided in the rotating tube, and the temperature measuring part may include the first temperature sensor and the first fixing member. Here, the first temperature sensor may measure the temperature distribution in the radial direction of the inner circumference of the rotating tube. Due to this feature, the temperature distribution may be accurately detected by measuring the temperature of the raw material powder put into the rotating tube and the temperature of the space in which the raw material powder does not exist.

### BRIEF DESCRIPTION OF THE DRAWINGS

FIG. 1 is a perspective view of a rotary kiln according to a first embodiment of the present invention.
FIG. 2 is a cross-sectional view of a rotary kiln according to the first embodiment of the present invention.
FIG. 3 is a cross-sectional view illustrating a temperature measuring part of the rotary kiln according to the first embodiment of the present invention.
FIG. 4 is a partial enlarged view of FIG. 3.
FIG. 5 is a view illustrating a display part of the rotary kiln according to the first embodiment of the present invention.
FIG. 6 is a cross-sectional view illustrating a heating body of the rotary kiln according to the first embodiment of the present invention.
FIG. 7 is a cross-sectional view of a rotary kiln according to a second embodiment of the present invention.
FIG. 8 is a schematic lateral cross-sectional view of the rotary kiln according to the second embodiment of the present invention.
FIG. 9 is a cross-sectional view illustrating a tube assembly and a temperature measuring part of the rotary kiln according to the second embodiment of the present invention.
FIG. 10 is a partial cross-sectional perspective view of FIG. 9.
FIG. 11 is a front view of a connection piece according to the second embodiment of the present invention.
FIG. 12 is a front view of a fixing piece according to the second embodiment of the present invention.
FIG. 13 is a flowchart illustrating a method for detecting a filling amount of rotary kiln according to the second embodiment of the present invention.
FIG. 14 is a process diagram illustrating the method for detecting the filling amount of rotary kiln according to the second embodiment of the present invention.
FIG. 15 is a cross-sectional view illustrating another example of the rotary kiln according to the second embodiment of the present invention.
FIG. 16 is a cross-sectional view of a rotary kiln according to a third embodiment of the present invention.
FIG. 17 is a partial cross-sectional view illustrating a coupling structure of a sintering assembly and a tube assembly in the rotary kiln according to the third embodiment of the present invention.
FIG. 18 is a perspective view illustrating the sintering assembly of the rotary kiln according to the third embodiment of the present invention.
FIG. 19 is an assembly view illustrating the sintering assembly of the rotary kiln according to the third embodiment of the present invention.
FIG. 20 is a perspective view illustrating a first example of a sintering part provided in the sintering assembly.
FIG. 21 is a perspective view illustrating a second example of the sintering part provided in the sintering assembly.
FIG. 22 is a perspective view illustrating a third example of the sintering part provided in the sintering assembly.

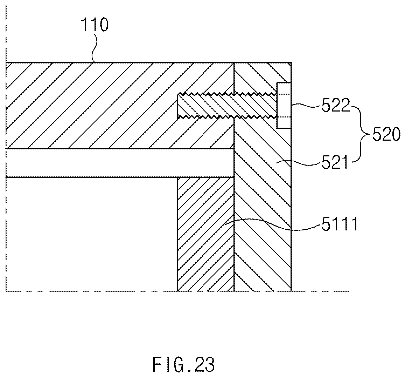

FIG. 23 is an enlarged cross-sectional view illustrating a coupling state of the tube assembly and the sintering assembly.
FIG. 24 is a cross-sectional view illustrating another example of the rotary kiln according to the third embodiment of the present invention.
FIG. 25 is a cross-sectional view taken along line A-A of FIG. 24.
FIG. 26 is a cross-sectional view taken along line B-B of FIG. 25.
FIG. 27 is a perspective view illustrating a rotating tube of a rotary kiln according to a fourth embodiment of the present invention.
FIG. 28 is a cross-sectional view of FIG. 27.
FIG. 29 is a process diagram of a fusing process in a method for manufacturing a rotating tube.
FIG. 30 is a process diagram of a bending process in the method for manufacturing the rotating tube.
FIG. 31 is a process diagram illustrating another example of the bending process in the method for manufacturing the rotating tube.
FIG. 32 is a cross-sectional view illustrating another example of the rotary kiln according to the fourth embodiment of the present invention.
FIG. 33 is a cross-sectional view illustrating further another example of the rotary kiln according to the fourth embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Rotary kiln according to first embodiment of the present invention]

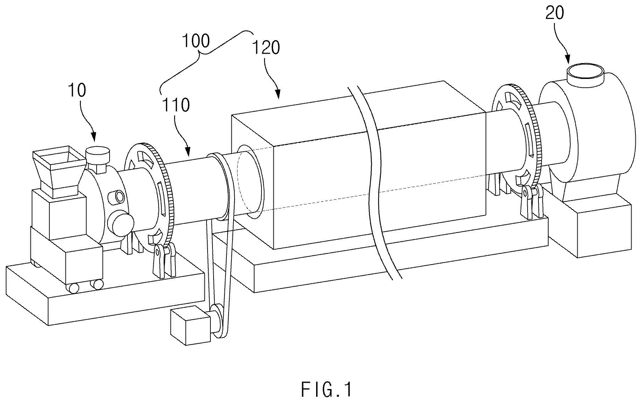

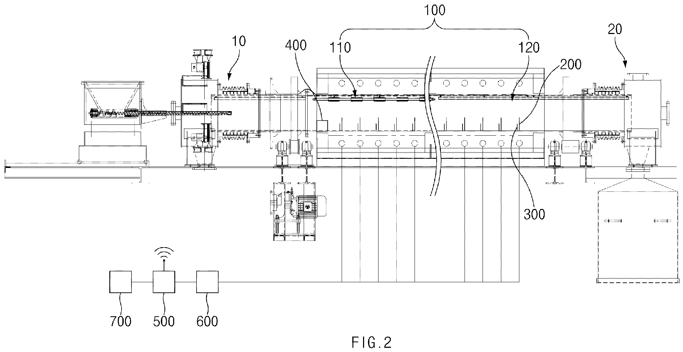

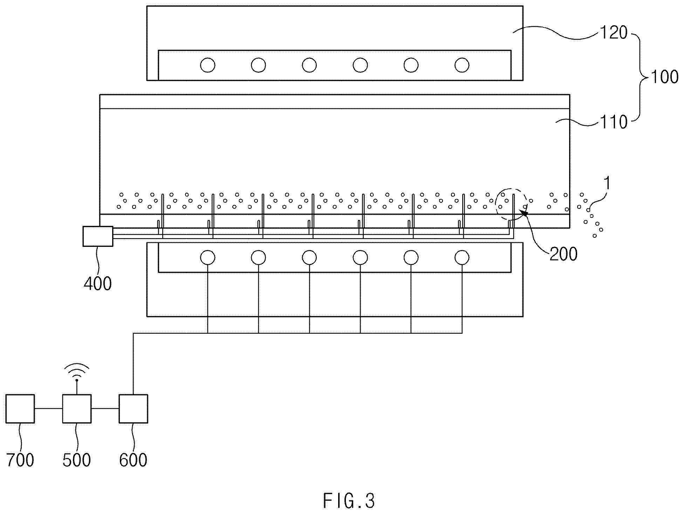

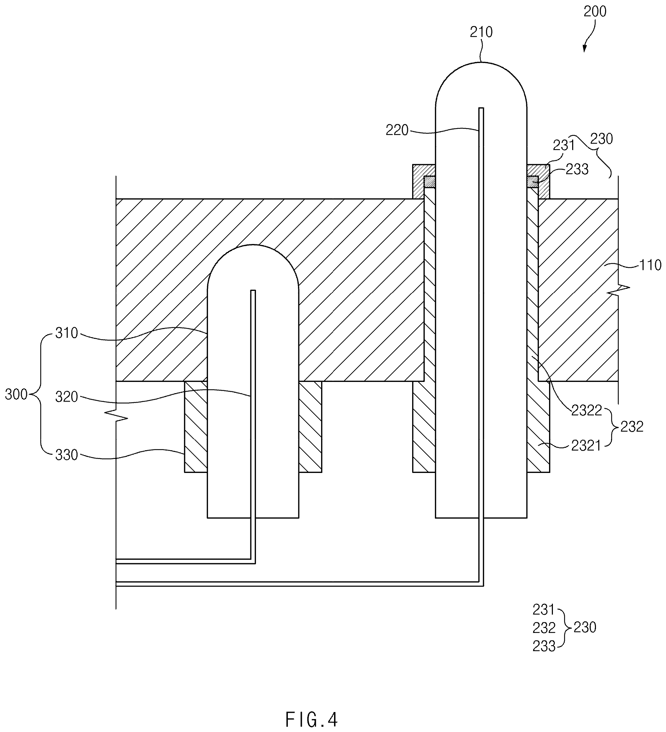

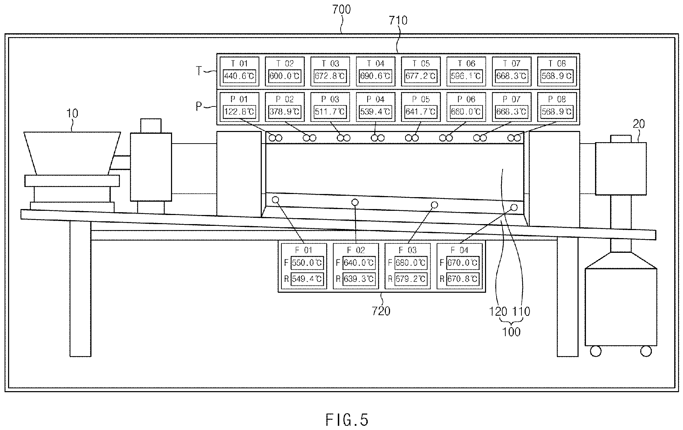

FIG. 1 is a perspective view of a rotary kiln according to a first embodiment of the present invention, FIG. 2 is a cross-sectional view of a rotary kiln according to the first embodiment of the present invention, FIG. 3 is a cross-sectional view illustrating a temperature measuring part of the rotary kiln according to the first embodiment of the present invention, FIG. 4 is a partial enlarged view of FIG. 3, and FIG. 5 is a view illustrating a display part of the rotary kiln according to the first embodiment of the present invention.

As illustrated in FIGS. 1 and 2, a rotary kiln according to a first embodiment of the present invention is configured to stir raw material powder and includes a tube assembly 100, a supply assembly 10, and a collecting assembly 20.

The raw material powder may be a mixture of a precursor for preparing a positive electrode active material and a lithium raw material.

### Tube assembly

The tube assembly 100 has a structure for mixing and heating the raw material powder while rotating in a state of being horizontally disposed. That is, the tube assembly 100 includes a rotating tube 110 for mixing the raw material powder 1 while rotating in the state of being horizontally disposed and a heating body 120 for heating the rotating tube 110. The rotating tube 110 may have a double structure including an outer metal material and an inner metal material.

That is, in the tube assembly 100, the rotating tube 110 is heated to a set temperature by the heating body 120, and the heated rotating tube 110 mixes and heats the supplied raw material powder 1 while rotating.

The tube assembly 100 includes a support member that supports the tube assembly 100 to rotate in a horizontal direction. The support member includes a rotary gear provided in a shape surrounding an outer circumferential surface of the tube assembly 100 and a support part provided with a support gear that supports the rotary gear while being engaged with each of both sides of a bottom surface of the rotary gear to rotate by the rotary gear.

The tube assembly 100 includes a rotating member that rotates the tube assembly in the horizontal direction. The rotating member includes a driving gear coupled to the outer circumferential surface of the tube assembly 100 and a driving motor engaged with the driving gear and rotating the tube assembly 100 in the horizontal direction through the driving gear.

The heating body 120 includes a heating main body provided in a shape surrounding the outer circumferential surface of the rotary tube 110 and a heating medium provided in the heating main body corresponding to the rotary tube 110 to heat the rotary tube 110.

Here, the heating medium may be any one of an electric heating body, SIC, Mo-Si, and a gas burner. In addition, an outer surface of the heating main body may be provided to be made of a heat-resistant material so that heat source of the heating medium is not discharged to the outside.

### Supply assembly

The supply assembly 10 has a structure that supplies the raw material powder to the rotating tube 110. That is, the supply assembly 10 includes an input member inserted into one end of the rotary tube 110 (left end of the rotary tube 110 when viewed in FIG. 2) and into which the raw material powder is put into the rotary tube 110, a chamber that collects a gas and vapor generated when the raw material powder supplied into the rotary tube 110 is heated, and a protection member that seals a gap between the rotary tube 110 and the chamber.

### Collecting assembly

The collecting assembly 20 has a structure that collects the raw material powder discharged from the rotating tube 110. That is, the collecting assembly 20 includes a collecting member into which the other end of the rotating tube 110 (right end of the rotating tube 110 when viewed in FIG. 2) is freely rotatably inserted. The collecting member collects the raw material powder discharged from the rotating tube 110 and then moves the raw material powder to a set place for storage.

As illustrated in FIGS. 3 and 4, the rotary kiln according to the first embodiment of the present invention includes a temperature measuring part 200 provided in the rotating tube.

The temperature measuring part 200 has a structure capable of directly measuring a temperature of the rotating tube 110 provided in the tube assembly 100 and a temperature of the raw material powder rotated and heated by the tube assembly 100. Thus, the temperature of the rotating tube 110 and the temperature of the raw material powder may be accurately measured, and as a result, quality of the raw material powder may be easily managed.

Hereinafter, the temperature measuring part will be described in detail with reference to the accompanying drawings.

### Temperature measuring part

The temperature measuring part 200 has a structure capable of directly measuring the temperature of the raw material powder being heated while rotating by the rotating tube 110. That is, the temperature measuring part 200 includes a first fixing member 210, a first temperature sensor 220 and a first coupling member 230.

The first fixing member 210 is configured to fix the first temperature sensor 220 to the rotating tube 110 so as to protect the first temperature sensor 220. That is, the first fixing member 210 has a cylindrical shape and has a structure of which a front end is disposed inside the rotating tube 110 while being inserted from the outside to the inside of the rotating tube 110. Thus, the first fixing member 210 is in direct contact with the raw material powder supplied to the rotating tube 110, and as a result, the first fixing member 210 may increase to a temperature corresponding to that of the raw material powder.

The first fixing member 210 may be made of a metal material so that the heat source of the raw material powder is quickly conducted. Particularly, the first fixing member 210 may be made of the same material as the rotating tube 110. For example, the first fixing member 210 may be made of a nickel material. Thus, the first fixing member 210 may quickly increase to the temperature of the raw material powder, and the ease of manufacturing may be improved.

A front end of the first fixing member 210 (i.e., the front end of the first fixing member disposed inside the rotating tube) may be provided in a hemispherical shape. This may greatly reduce the frictional force between the first fixing member 210 and the raw material powder and greatly improve a contact area between the first fixing member 210 and the raw material powder. In addition, the first fixing member 210 may be prevented from being damaged. Here, the first fixing member 210 may be provided in a conical shape.

The first temperature sensor 220 is embedded in the front end of the first fixing member 210 and detects the temperature of the raw material powder by measuring the temperature of the first fixing member 210.

Here, the first temperature sensor 220 may be provided as a thermocouple. The thermocouple is a device made of two types of metal to measure a wide range of temperatures using the Seebeck effect. That is, in the thermocouple, when two types of metals are combined with each other, if temperatures at both bonded ends are different from each other, current flows between the two metals. A difference in temperatures between the two contacts may be seen through this current.

The first coupling member 230 has a structure that fixes the first fixing member 210 to the rotating tube 110 while being coupled to a distal end of the first fixing member 210.

That is, the first coupling member 230 includes a first coupling piece 231 provided inside the rotating tube 110 and coupled to the front end of the first fixing member 210, a second coupling piece 232 which is provided outside the rotating tube 110 and of which a front end is coupled to the first coupling piece 231 between the first fixing member 210 and the rotating tube 110, and a pressing piece 233 disposed between the first coupling piece 231 and the second coupling piece 232 to press the first fixing member 210 while being deformed when the first and second coupling pieces 231 and 232 are coupled to each other.

Here, the second coupling piece 232 is provided with an outer part 2321 provided outside the rotating tube 110 and an inner part 2322 which is provided between the first fixing member 210 and an insulator and of which a front end is coupled to the first coupling piece.

Each of the first coupling piece 231 and the second coupling piece 232 has a nut shape so that the first fixing member 210 passes therethrough.

Thus, the first coupling member 230 may fix the first fixing member 210 while the pressing piece 233 is deformed when the first coupling piece 231 and the second coupling piece 232 are coupled to each other, and when the coupling of the first coupling piece 231 and the second coupling piece 232 is released, the fixing of the first fixing member 210 may be released while the pressing piece 233 is restored.

The first coupling piece 231 may be welded to the inner circumferential surface of the rotating tube 110 for release and sealing.

The first coupling member 230 may release the coupling of the first coupling piece 231 and the second coupling piece 232 and then allow the fixing member 210 to move so as to further protrude into the rotating tube 110 or conversely move to the outside of the rotating tube 110. Thus, the position of the temperature measuring part 200 coupled to the rotating tube 110 may be adjusted. Thus, the position of the temperature measuring part 200 coupled to the rotating tube 110 may be easily adjusted according to an input amount of raw material powder that is put into the rotating tube 110, and as a result, the temperature of the raw material powder may be more accurately measured. In addition, compatibility and a downtime may be reduced.

The temperature measuring part 200 having such a structure may directly measure the temperature of the raw material powder that is put into the rotating tube 110, and as a result, an accurate temperature of the raw material powder may be obtained. Particularly, the temperature measuring part 200 may stably protect and fix the first temperature sensor 220 by including the first fixing member 210 and the first coupling member 230.

An auxiliary temperature measuring part 300 for directly measuring the temperature of the rotating tube 110 may be further provided.

The auxiliary temperature measuring part 300 has a structure capable of accurately measuring the temperature of the rotating tube 110. That is, the auxiliary temperature measuring part 300 includes a second fixing member 310, a second temperature sensor 320, and a second coupling member 330.

The second fixing member 310 is configured to protect the second temperature sensor 320 from the rotating tube 110. That is, the second fixing member 310 is inserted from the outside to the inside of the rotating tube 110, and the front end of the second fixing member 310 is provided so as not to pass into the tube assembly 100 and is in contact with the rotating tube 110 to increase in temperature corresponding to the rotating tube 110.

Here, the second fixing member 310 may be made of the same material as the first fixing member 210 to reduce manufacturing costs.

The second temperature sensor 320 is embedded into a front end of the second fixing member 310 and detects the temperature of the rotating tube 110 by measuring the temperature of the second fixing member 310. The second temperature sensor 320 may be made of the same sensor as the first temperature sensor 220.

The second coupling member 330 may fix the second fixing member 310 to the rotating tube 110 while being coupled to the distal end of the second fixing member 310. That is, the second coupling member may fix the second fixing member 310 to the rotating tube 110 while the second fixing member 310 is inserted into the inside, and the outside of the second fixing member 310 is coupled to the rotating tube 110. The second coupling member 330 may be welded to the rotating tube 110 for sealing and fixing power.

The auxiliary temperature measuring part 300 having such a structure may directly measure the temperature of the rotating tube 110, and as a result, an accurate temperature of the rotating tube 110 may be obtained. Particularly, the auxiliary temperature measuring part 300 may stably protect and fix the second temperature sensor 320 by including the second fixing member 310 and the second coupling member 330.

A plurality of temperature measuring parts 200 and auxiliary temperature measuring parts 300 may be provided at set intervals in a longitudinal direction of the rotating tube 110. Thus, the temperatures of the raw material powder and the rotating tube 110 may be directly measured for each set interval of the rotating tube 110, and as a result, the ease of quality management may be improved.

Therefore, the rotary kiln according to the first embodiment of the present invention may include the temperature measuring part 200 and the auxiliary temperature measuring part 300 to accurately measure the temperatures of the raw material powder and the rotating tube 110, and thus, the temperature of the raw material powder may be effectively managed to easily manage the quality of the raw material powder.

The rotary kiln according to the first embodiment of the present invention may further include a receiving part 400, an inspection part 500, a control part 600, and a display part 700 for temperature management.

FIG. 5 is a view illustrating a display part 700 that displays a state in which a temperature is managed by the receiving part 400, the inspection part 500, and the control part 600 of the rotary kiln according to the first embodiment of the present invention.

### Receiving part

The receiving part 400 is provided at one end of the rotating tube 110 to measure the temperature of the raw material powder measured by the temperature measuring part 200 and the temperature of the rotating tube 110 measured by the auxiliary temperature measuring part 300.

A temperature measuring assembly including the temperature measuring part and the auxiliary temperature measuring part are constituted.

That is, as illustrated in FIG. 5, a plurality of temperature measuring assemblies are provided in the longitudinal direction of the rotating tube 110, and the receiving part 400 measures the temperature of the raw material powder and the temperature of the rotating tube 110, which are measured by the plurality of temperature measuring assemblies. Thus, the temperature of the raw material powder and the temperature of the rotating tube 110 are displayed in real time through the first display window 710 illustrated in FIG. 5.

### Inspection part

The inspection part 500 maintains a normal signal when the temperature of the raw material powder and the temperature of the rotating tube 110, which are received by the receiving part 400, are within a set input value and generates a defective signal when the temperatures are less or greater than the set input value.

Particularly, the inspection part 500 generates a defect signal at a corresponding position when any one of the plurality of temperatures of the raw material powder and the rotating tube 110 is less than or greater than the set input value.

This may be displayed so that the temperature measuring part 200 or the auxiliary temperature measuring part 300 having the defective signal are turned on or displayed in a different color on a first display window 710 illustrated in FIG. 5.

### Control part

When the defective signal is generated by the inspection part 500, the control part 600 adjusts a heating temperature of the rotating tube 110 so that a heating temperature of the raw material powder and the heating temperature of the rotating tube 110 are within the set value.

That is, referring to FIG. 5, the control part 600 may adjust the temperature of the rotating tube 110 by increasing or decreasing in temperature of the heating body 120 disposed in the longitudinal direction of the rotating tube 110 and may adjust the temperature of the raw material powder while heating the raw material powder by the rotating tube 110 that is adjusted in temperature.

A second display window 720 illustrated in FIG. 5 displays a current temperature of the heating body 120 and a modified temperature of the heating body 120 controlled by the control part 600.

### Display Part

As illustrated in FIG. 5, the display part 700 includes the first display window 710 and the second display window 720.

The first display window 710 displays a temperature P of the raw material powder and a temperature T of the rotating tube 110, which are received by the receiving part 400.

The second display window 720 displays a current temperature F of the heating body 120 that heats the rotating tube 110 and a modified temperature R of the heating body 120 controlled by the control part 600.

Thus, the display part 700 may display a current temperature of the rotary kiln in real time, and as a result, an operator may easily check whether or not there is a defect. Particularly, a location of the defect may be accurately identified.

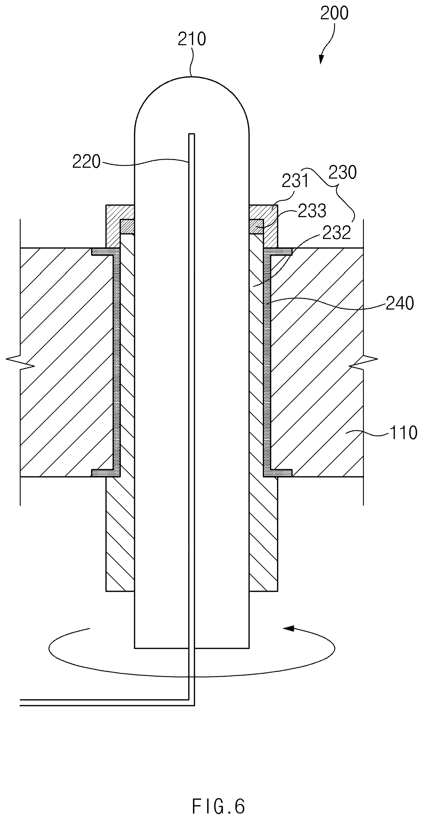

FIG. 6 is a cross-sectional view of the rotary kiln according to the first embodiment of the present invention.

In the rotary kiln according to the first embodiment of the present invention, as illustrated in FIG. 6, an insulator 240 having thermal insulation properties is provided between the temperature measuring part 200 and the rotating tube 110.

That is, the insulator 240 has a structure that blocks conduction of heat between the temperature measuring part 200 and the rotating tube 110.

For example, the insulator 240 is provided between the first fixing member of the temperature measuring part 200 and the rotating tube 110. In more detail, the insulator 240 may be provided in a shape surrounding the outer circumferential surface of the first fixing member that is in contact with the rotating tube 110. In addition, the insulator 240 may be provided in the hole and on a surface of the rotating tube through which the temperature measuring part 200 passes or contacts.

Thus, the insulator 240 may block the heat conduction between the temperature measuring part 200 and the rotating tube 110, and as a result, the temperature measuring part 200 may accurately measure the temperature of the raw material powder by the insulator 240.

The insulator 240 may be made of glass fiber.

### [Operation method of rotary kiln according to first embodiment of the present invention]

Hereinafter, an operation of the rotary kiln according to the first embodiment of the present invention will be described.

First, the rotating tube 110 is heated through the heating body 120 of the tube assembly 100 to increase up to a set temperature. At this time, the rotating tube 110 rotates.

When the rotating tube 110 increases up to the set temperature, the raw material powder is supplied to the rotating tube 110 through the supply assembly 10. Then, the raw material powder is sintered while rotating by the rotating tube 110 and heated at the same time.

Here, the temperature measuring part directly measures the temperature of the raw material powder and the temperature of the rotating tube 110, and the measured temperature of the raw material powder and the measured temperature of the rotating tube 110 are displayed on the first display window 710 of the display part 700 in real time. In addition, the current temperature of the heating body 120 is displayed on the second display window 720 of the display part 700 in real time.

Here, the inspection part 500 outputs a defect signal when the temperature of the raw material powder and the temperature of the rotating tube 110, which are received by the receiving part 400, are less than or greater than the set input value. This may be displayed through the first display window 710 of the display part 700.

Next, when the defective signal is output by the inspection part 500, the control part 600 adjusts the current temperature of the heating body 120 so that the temperature of the raw material powder and the temperature of the rotating tube 110 are within the set input value. Here, the adjusted temperature of the heating body 120 is displayed on the second display window 720 of the display part 700.

As described above, the temperature measuring assembly may uniformly maintain the temperature of the raw material powder mixed and heated by the rotating tube, and as a result, the quality may be effectively managed.

Thereafter, the raw material powder after the sintering process is completed is collected through the collecting assembly 20.

Hereinafter, in descriptions of another embodiment of the present invention, constituents having the same function as the above-mentioned embodiment have been given the same reference numeral in the drawings, and thus duplicated description will be omitted.

### [Rotary kiln according to second embodiment of the present invention]

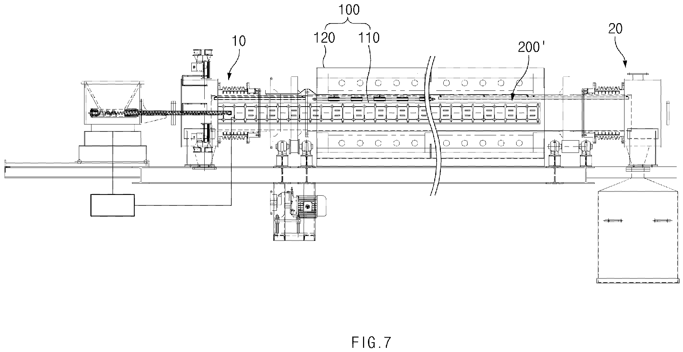

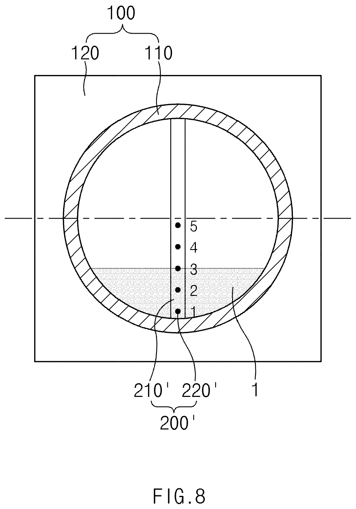

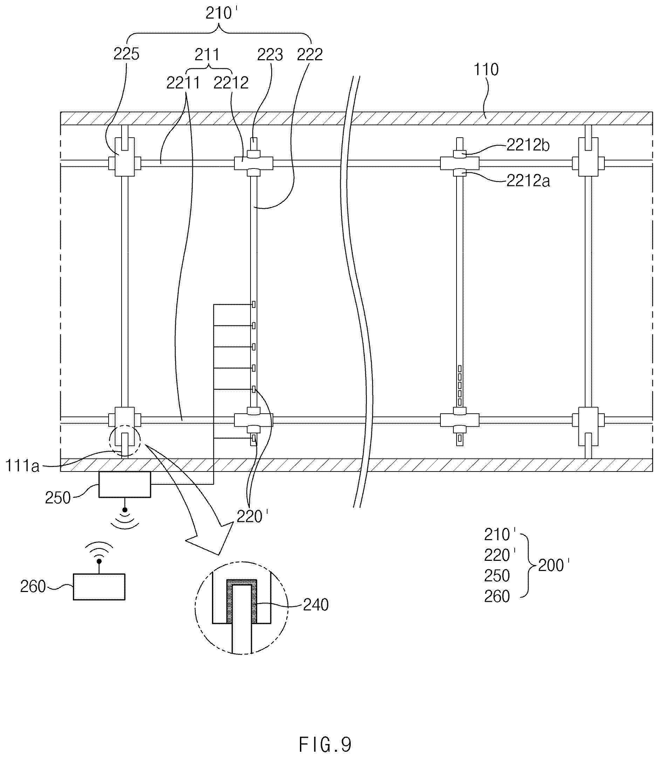

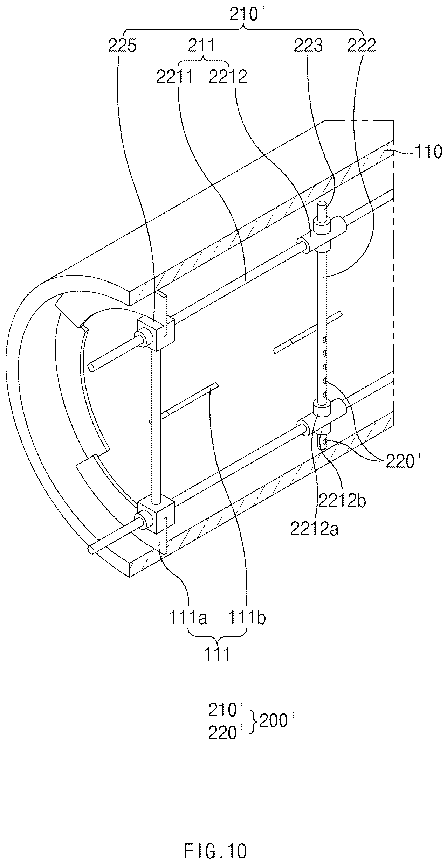

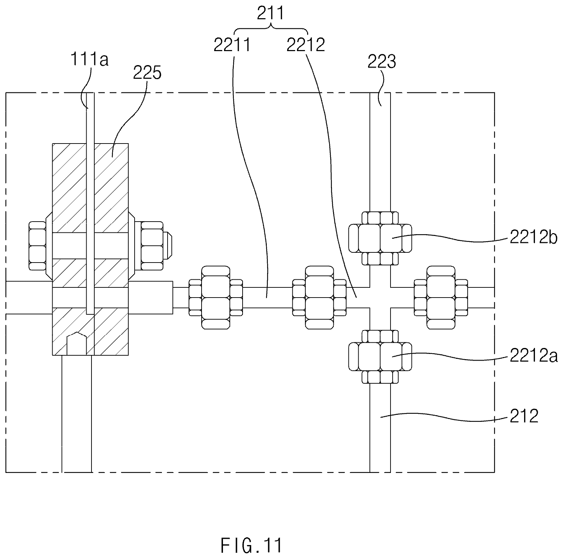

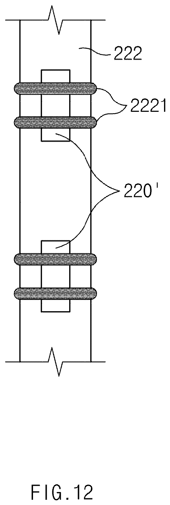

FIG. 7 is a cross-sectional view of a rotary kiln according to a second embodiment of the present invention, FIG. 8 is a schematic lateral cross-sectional view of the rotary kiln according to the second embodiment of the present invention, FIG. 9 is a cross-sectional view illustrating a tube assembly and a temperature measuring part of the rotary kiln according to the second embodiment of the present invention, FIG. 10 is a partial cross-sectional perspective view of FIG. 9, FIG. 11 is a front view of a connection piece according to the second embodiment of the present invention, and FIG. 12 is a front view of a fixing piece according to the second embodiment of the present invention.

As illustrated in FIG. 7, a rotary kiln according to a second embodiment of the present invention is configured to stir raw material powder and includes a tube assembly 100, a supply assembly 10 that supplies the raw material powder 1 to the tube assembly 100, and a collecting assembly 20 that collects the raw material powder 1 discharged from the tube assembly.

As illustrated in FIG. 7, the rotary kiln according to the second embodiment of the present invention further include a temperature measuring part 200' that measures a temperature distribution in a radial direction of an inner circumference of a rotating tube to detect a filling amount of raw material powder 1 put into the tube assembly 100.

The raw material powder 1 may be a mixture of a precursor for producing a positive electrode active material and a lithium raw material.

### Tube assembly

The tube assembly 100 is configured to rotate and heat the raw material powder 1 at the same time and includes a rotating tube 110 and a heating body 120.

Here, since the rotating tube 110 and the heating body 120 have been described in detail in the first embodiment, detailed descriptions thereof will be omitted.

The tube assembly 100 further includes a sintering member 111 that stirs the raw material powder 1 put into the rotating tube 110 while being provided inside the rotating tube 110. The sintering member 111 includes a screw sintering piece 111a disposed along an inner circumferential surface of the rotating tube 110 and a straight sintering piece 111b disposed along a longitudinal direction of the rotating tube 110.

That is, the rotating tube includes a sintering member.

### Supply assembly

The supply assembly 10 has a structure that supplies the raw material powder 1 to the rotating tube 110.

### Collecting assembly

The collecting assembly 20 has a structure that collects the raw material powder 1 discharged from the rotating tube 110.

Since the supply assembly and the collecting assembly have been described in detail in the first embodiment, a detailed description thereof will be omitted.

The rotary kiln according to the second embodiment of the present invention includes a temperature measuring part 200' for accurately detecting the filling amount of raw material powder 1 put into the rotating tube 110.

### Temperature measuring part

The temperature measuring part 200' includes a plurality of first temperature sensors 220' that detect the temperature distribution in the radial direction of the inner circumference of the rotating tube 110, and the plurality of first temperature sensors 220' measure the temperature of the raw material powder 1 put into the rotating tube 110 while being disposed in the radial direction of the inner circumference of the rotating tube 110 and a temperature of a space in which the raw material powder 1 does not exist to detect the temperature distribution.

That is, the plurality of first temperature sensors 220' may detect the filling amount of raw material powder 1 put into the rotating tube 110 through the temperature distribution in the radial direction of the inner circumference of the rotating tube 110.

Particularly, the plurality of first temperature sensors 220' may be provided as temperature assemblies, and the plurality of temperature assemblies may be provided in the longitudinal direction of the rotating tube 110. Thus, the filling amount of raw material powder 1 put into the entire rotating tube 110 may be accurately detected.

The first temperature sensor 220' may be provided as a thermocouple that detects the temperature of the raw material powder 1. In the thermocouple, when two types of metals are combined with each other, if temperatures at both bonded ends are different from each other, current flows between the two metals. A difference in temperatures between the two contacts may be seen through this current. The temperature of the rotating tube 110 may be measured using a thermoelectric phenomenon. Thermocouple includes a platinum-platinum rhodium thermocouple, a chromel-alumel thermocouple, an iron-constantan thermocouple, and a copper-constantan thermocouple.

As described above, the plurality of first temperature sensors 220' may detect a height at which the raw material powder 1 is filled by detecting the temperature distribution in the radial direction of the inner circumference of the rotating tube 110.

The temperature measuring part 200' includes a first fixing member 210' that fixes the plurality of first temperature sensors 220' to be disposed in the radial direction of the inner circumference of the rotating tube 110.

As illustrated in FIGS. 9 and 10, the first fixing member 210' is configured to fix the plurality of first temperature sensors 220' and includes a pair of horizontal parts 211 and a vertical rod 222.

The pair of horizontal parts 211 have the same structure are disposed to correspond to the inside of the rotating tube 110 and extend in a longitudinal direction of the rotating tube 110.

Here, the horizontal part 211 may be provided with a plurality of horizontal rods 2211 and one or more connection pieces 2212 connecting the plurality of horizontal rods 2211 in the longitudinal direction, and thus, the horizontal part 221 may be easily assembled to correspond to a length of the rotating tube 110.

That is, the pair of horizontal parts 211 may connect the horizontal rods 2211 corresponding to each other in the longitudinal direction by inserting and coupling the horizontal rods 2211 corresponding to each other into sockets provided at both ends of the connection piece 2212.

The vertical rod 222 is configured to arrange the plurality of first temperature sensors 220' in a radial direction of the inner circumference of the rotating tube 110 and is disposed in the radial direction of the inner circumference of the rotating tube 110 so that both ends thereof are respectively fixed to the pair of horizontal parts 211, and the plurality of first temperature sensors 220' are disposed at set intervals in the longitudinal direction. That is, the plurality of first temperature sensors 220' are disposed in the inner circumferential radial direction of the rotating tube 110 by the vertical rod 222.

As illustrated in FIG. 11, the vertical rod 222 has one end fixed while being coupled to an inner socket 2212a of the connection piece 2212 provided on the horizontal part 211 and the other end coupled to an outer socket 2212b of the connection piece 2212 provided on the other horizontal part 211. Thus, the coupling property between the vertical rod 222 and the horizontal part 211 may be improved.

As illustrated in FIG. 12, the vertical rod 222 may be provided with a fixing piece 2221 that fixes the plurality of first temperature sensors 220' so as not to move. For example, the fixing piece 2221 may be provided as a metal band that fixes the first temperature sensor 220' while being wound around an outer circumferential surface of the first temperature sensor 220' disposed on the vertical rod 222. Particularly, the metal band may conveniently fix the first temperature sensor 220' to the vertical rod 222 or may simply separate the first temperature sensor 220'. As a result, it has ease of maintenance.

The first fixing member 210' may further include an auxiliary vertical rod 223 provided between the outer circumferential surface of the connection piece 2212 and the inner circumferential surface of the rotating tube 110. Here, the auxiliary vertical rod 223 is disposed on the same vertical line as the vertical rod 222. Particularly, a first temperature sensor 220' that detects the raw material powder 1 between the outer circumferential surface of the connection piece 2212 and the inner circumferential surface of the rotating tube 110 may be further disposed on the auxiliary vertical rod 223. Thus, the temperature of the raw material powder 1 filled on the outer circumferential surface of the connection piece 2212 and the inner circumferential surface of the rotating tube 110 may be measured.

The fixing piece 2221 that fixes the first temperature sensor 220' so as not to move may be provided on the auxiliary vertical rod 223. The fixing piece 2221 may be provided as a metal band that fixes the first temperature sensor 220' while being wound around an outer circumferential surface of the first temperature sensor 220' disposed on the auxiliary vertical rod 223.

The first fixing member 210' may further include a bracket 225 that fixes the pair of horizontal parts 211 to a sintering member 111 provided on the rotating tube 110. The bracket 225 has one end that is bolted to the sintering member 111 and the other end into which the horizontal rod 2211 of the horizontal part 211 is fitted. Thus, the first fixing member 210' may be stably fixed inside the rotating tube 110.

An insulator 240 is provided between the first fixing member 210' and the rotating tube 110. That is, the insulator 240 is provided between the first fixing member and the rotating tube to block heat from the rotating tube from being conducted to the first fixing member.

As described above, the first fixing member 210' may fix the plurality of first temperature sensors 220' to be stably disposed in the radial direction of the inner circumference of the rotating tube 110.

The temperature measuring part 200' may further include a detection member 250. The detection member 250 detects a filling amount of raw material powder 1 put into the rotating tube 110 through a temperature distribution in the radial direction of the inner circumference of the rotating tube 110 detected by the plurality of first temperature sensors 220' .

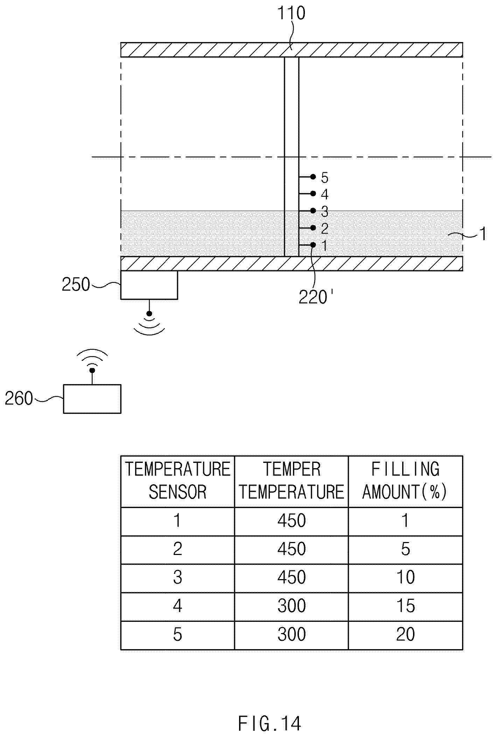

That is, referring to FIG. 14, the detection member 250 detects the first temperature sensors 220' that detect the temperature of the raw material powder 1 in a state in which the plurality of first temperature sensors 220' are disposed in the radial direction of the rotating tube 110 and calculates the filling amount of raw material powder 1 by selecting input filling amount data corresponding to the number of the detected first temperature sensors 220'.

In the input filling amount data, the filling amount calculated according to a diameter of the rotating tube 110 and a position of the first temperature sensor 220' are input by an operator.

The detection member 250 calculates the filling amount of raw material powder 1 of the entire rotating tube 110 by integrating the filling amounts calculated from the plurality of temperature assemblies disposed in the longitudinal direction of the rotating tube 110.

For example, referring to FIG. 14, if a temperature detected by Nos. 1 to 3 first temperature sensors 220' is 450°, and a temperature detected by Nos. 4 and 5 first temperature sensors 220' is 300°, the detection member 250 calculates the filling amount by selecting 10% of the filling amount corresponding to the three first temperature sensors 220' in the input filling amount data.

The temperature measuring part 200' may further include a control member 260. The control part 260 control and adjust an input amount of raw material powder 1 put into the rotating tube 110 when the filling amount of powder raw material detected by the detection member 250 is less than or greater than a preset filling amount of powder raw material.

That is, the control member 260 controls the supply assembly 10 to increase in input amount of raw material powder 1 when the filling amount put into the rotating tube 110 is less than the set filling amount of powder raw material. Conversely, if the filling amount put into the rotating tube 110 is greater than the set filling amount of powder raw material, the supplying assembly 10 is controlled to reduce the input amount of raw material powder 1. As described above, the filling amount of raw material powder 1 filled in the rotating tube 110 may be maintained constantly.

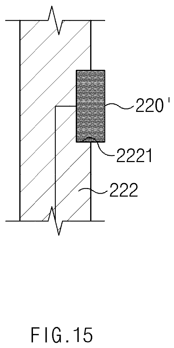

FIG. 15 is a cross-sectional view illustrating another example of the rotary kiln according to the second embodiment of the present invention.

As illustrated in FIG. 15, the vertical rod 222 is provided with a fixing piece 2221 that fixes the plurality of first temperature sensors 220', and the fixing piece 2221 is provided as a coupling groove defined in the vertical rod 222 so that the first temperature sensor 220' is fitted therein.

That is, since the first temperature sensor is inserted and coupled into the coupling groove defined in the vertical rod 222, work efficiency and structure simplification may be improved.

Particularly, since fixing force of the fixing piece 2221 may increase, a phenomenon in which the plurality of first temperature sensors disposed on the vertical rod 222 may be prevented from moving when the rotating tube 110 rotates.

Therefore, the rotary kiln according to the second embodiment of the present invention may include the temperature measuring part 200' to detect the temperature distribution in the radial direction of the inner circumference of the rotating tube 110, and thus, the filling amount of raw material powder 1 filled in the rotating tube 110 may be accurately detected in real time, and as a result, the filling amount of raw material powder 1 filled in the rotating tube 110 may be controlled to be constant.

Hereinafter, a method for detecting a filling amount using the rotary kiln according to the first embodiment of the present invention will be described.

### [Method for detecting filling amount of rotary kiln according to second embodiment of the present invention]

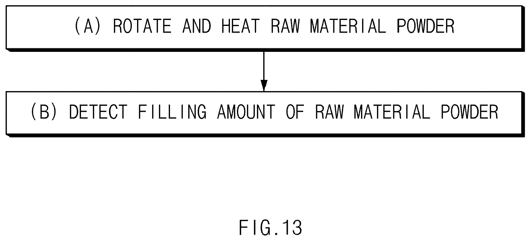

FIG. 13 is a flowchart illustrating a method for detecting a filling amount of rotary kiln according to the second embodiment of the present invention, and FIG. 14 is a process diagram illustrating the method for detecting the filling amount of rotary kiln according to the second embodiment of the present invention.

Referring to FIG. 13, a method for detecting a filling amount of rotary kiln according to the second embodiment of the present invention includes: a process (a) of rotating a raw material powder 1 put through a rotating tube 110 disposed in a horizontal direction to heat the rotating tube 110 rotating by the rotating tube 110; and a process (b) of detecting a temperature distribution in a radial direction of an inner circumference of the rotating tube 110 using a plurality of first temperature sensors 220' provided in a temperature measuring part 200'.

In the method for detecting the filling amount of rotary kiln according to the second embodiment of the present invention, a tube assembly 100, a temperature measuring part 200', a supply assembly 10, and a collecting assembly 20 are used, and the tube assembly 100, the temperature measuring part 200', the supply assembly 10, and the collecting assembly 20 have been described in detail above, and thus, detailed descriptions thereof will be omitted.

### Process (a)

In the process (a), the rotating tube 110 of the tube assembly 100 rotates in the horizontal direction and then is heated to a set temperature through a heating body 120 of the tube assembly 100. Next, when the rotating tube 110 is heated to the set temperature, the raw material powder 1 is put into the rotating tube 110 using the supply assembly 10. Then, the raw material powder 1 is rotated and heated at the same time by the heated rotating tube 110 and mixed while being sintered by the sintering member 111 provided inside the rotating tube 110.

### Process (b)

The process (b) includes a process of detecting the temperature distribution in the radial direction of the inner circumference of the rotating tube 110 using the plurality of first temperature sensors 220' provided in the temperature measuring part 200'. That is, the plurality of first temperature sensors 220' are disposed in the radial direction of the inner circumference of the rotating tube 110 to measure a temperature of the raw material powder 1 put into the rotating tube 110 and a temperature of a space in which the raw material powder 1 does not exist, thereby detecting the temperature distribution.

For example, as illustrated in FIG. 14, five first temperature sensors 220' are disposed in the radial direction of the inner circumference of the rotating tube 110. That is, 1st, 2nd, and 3rd first temperature sensors 220' from a lower end are disposed to be in contact with the raw material powder 1, and 4th and 5th first temperature sensors 220' are disposed in the space in which the raw material powder 1 does not exist. Thus, the five first temperature sensors 220' measure the temperature of the raw material powder 1 put into the rotating tube 110 (1st, 2nd, and 3rd first temperature sensors described in the table in FIG. 14) and the temperature of the space in which the raw material powder 1 does not exist (4th and 5th first temperature sensors described in the table of FIG. 14) to detect the temperature distribution.

The process (b) includes a process of calculating a filling amount of raw material powder filled in the rotating tube 110 through the temperature distribution detected by the plurality of first temperature sensors 220' using the detection member 250 of the temperature measuring part 200'. That is, the detection member 250 detects the first temperature sensors 220' that detect the temperature of the raw material powder 1 in a state in which the plurality of first temperature sensors 220' are disposed in the radial direction of the rotating tube 110 and calculates the filling amount of raw material powder 1 by selecting input filling amount data corresponding to the number of the detected first temperature sensors 220'.

For example, referring to the table illustrated in FIG. 14, the detection member 250 selects input filling amount data corresponding to three first temperature sensors 220', which are 1st, 2nd, and 3rd first temperature sensors 220' to calculate 10%, which is the filling amount of raw material powder 1. The input filling amount data is input after being calculated by the operator.

The process (b) further includes a process of adjusting the input amount of raw material powder 1 put into the rotating tube 110 using a control member 260 of the temperature measuring part 200'. The control part 260 control and adjust an input amount of raw material powder 1 put into the rotating tube 110 when the filling amount of powder raw material calculated by the detection member 250 is less than or greater than a preset filling amount of powder raw material.

Therefore, in the method for detecting the filling amount of rotary kiln according to the first embodiment of the present invention, the filling amount of raw material powder 1 filled in the rotating tube 110 may be detected in real time to adjust the input amount of raw material powder 1.

### [Rotary kiln according to third embodiment of the present invention]

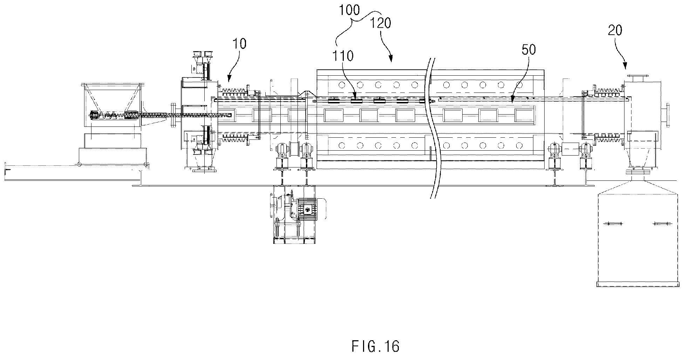

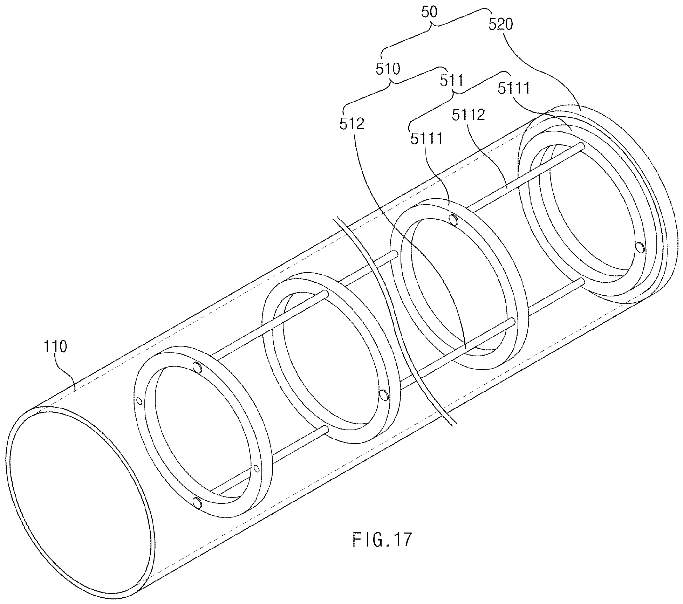

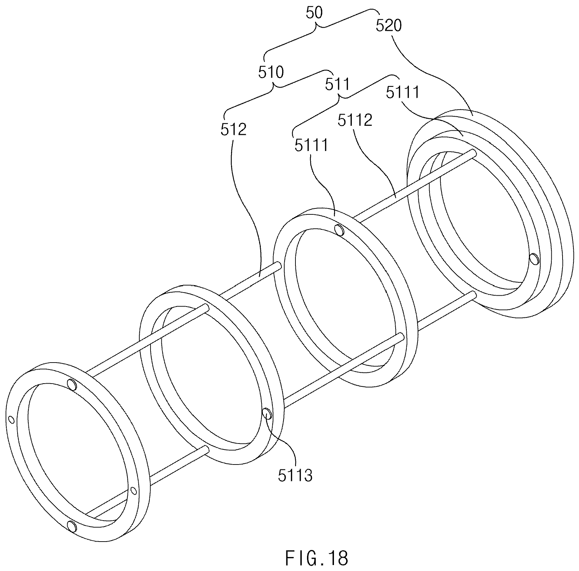

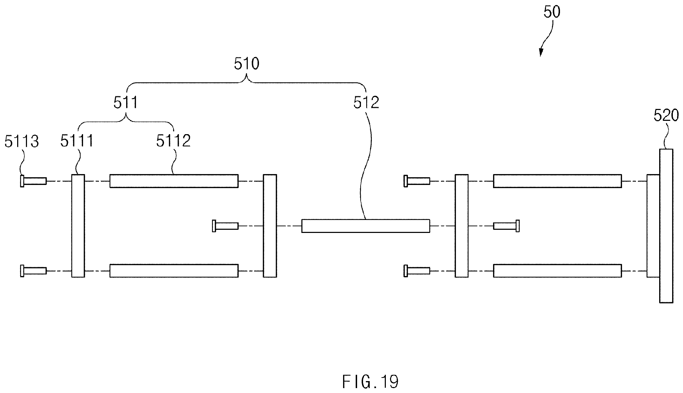

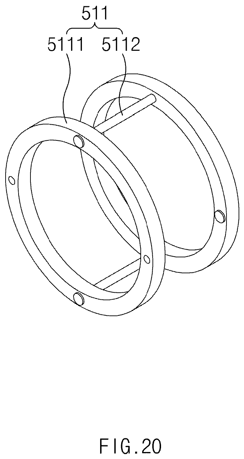

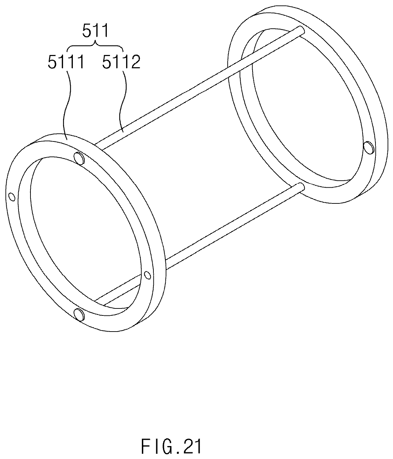

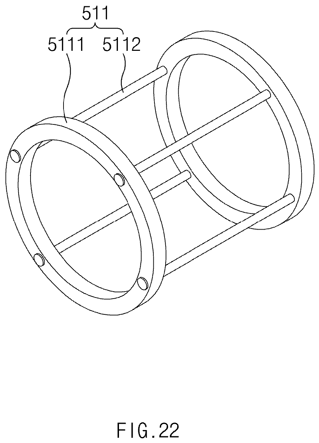

FIG. 16 is a cross-sectional view of a rotary kiln according to a third embodiment of the present invention, FIG. 17 is a partial cross-sectional view illustrating a coupling structure of a sintering assembly and a tube assembly in the rotary kiln according to the third embodiment of the present invention, FIG. 18 is a perspective view illustrating the sintering assembly of the rotary kiln according to the third embodiment of the present invention, FIG. 19 is an assembly view illustrating the sintering assembly of the rotary kiln according to the third embodiment of the present invention, FIG. 20 is a perspective view illustrating a first example of a sintering part provided in the sintering assembly, FIG. 21 is a perspective view illustrating a second example of the sintering part provided in the sintering assembly, and FIG. 22 is a perspective view illustrating a third example of the sintering part provided in the sintering assembly.

As illustrated in FIG. 16, a rotary kiln according to a third embodiment of the present invention is configured to sinter raw material powder and includes a tube assembly 100 including a rotating tube 110 and a heating body 120, and a supply assembly 10, and a collecting assembly 20.

### Tube assembly

The tube assembly 100 has a structure for mixing the raw material powder while rotating in a state of being horizontally disposed. That is, the tube assembly 100 includes a rotating tube 110, and the rotating tube has a double structure including an outer metal material and an inner metal material, which is provided inside the outer metal material.

Since the tube assembly has been described in detail in the first embodiment, a detailed description thereof will be omitted.

### Supply assembly

The supply assembly 10 has a structure for supplying the raw material powder to the tube assembly.

### Collecting assembly

The collecting assembly 20 has a structure that collects the raw material powder discharged from the tube assembly 100.

Since the supply assembly and the collecting assembly have been described in detail in the first embodiment, a detailed description thereof will be omitted.

The rotary kiln according to the third embodiment of the present invention includes a sintering assembly 50 for sintering the raw material powder rotating by the rotating tube 110 of the tube assembly 100.

Particularly, the sintering assembly 50 may be detachably provided inside the rotating tube 110. In other words, the sintering assembly 50 may be coupled to the rotating tube 110 without moving or may be released to be separated from the rotating tube 110. Thus, it is possible to replace the sintering assembly 50 having various sizes, shapes, and lengths according to structural changes of the facility, and as a result, work efficiency and downtime may be greatly reduced.

Hereinafter, the sintering assembly will be described in detail with reference to the accompanying drawings.

The sintering assembly is configured to sinter the raw material powder rotating by the tube assembly to spread the heat well or to stir the raw material powder to be mixed evenly.

### Sintering assembly

As illustrated in FIGS. 17 to 19, the sintering assembly 50 includes a sintering part 510 provided inside the rotating tube to sinter the raw material powder rotating by the rotating tube and a coupling part 520 connected to the stirring part 510 and detachably coupled to one end of the rotating tube 110 (a right end of the rotating tube as illustrated in FIG. 17).

The sintering part 510 includes one or more sintering pieces 511 that sinter the raw material powder. In addition, each of the sintering pieces 511 includes two or more rotatable bodies 5111 provided to be spaced apart from each other and a sintering rod 5112 connecting the rotatable bodies 5111 corresponding to each other and sintering the raw material powder rotating by the rotating tube 110.

The rotatable body 5111 has the same ring shape as an inner circumferential surface of the rotating tube and has a size less than that of the inner circumferential surface of the rotating tube. That is, as illustrated in FIG. 17, when the coupling part 520 is coupled to the rotating tube, the rotatable body 5111 is placed in a state of levitation inside the rotating tube. Thus, an outer circumferential surface of the rotatable body 5111 and an inner circumferential surface of the rotating tube 110 may be spaced the same interval from each other, and as a result, the sintering rod 5112 and the rotating tube 110 may be maintained at regular intervals, and thus, uniform sintering may be maintained. Particularly, an occurrence of contact between the rotatable body 5111 and the rotating tube 110 may be prevented.

The sintering bar 5112 has a bar shape and connects the rotatable bodies 5111 corresponding to each other. That is, both ends of the sintering bar 5112 may be coupled to the mutually corresponding rotatable bodies 5111 to connect the mutually corresponding rotatable bodies 5111 to each other. Particularly, two or more sintering rods 5112 are provided, and the two or more sintering rods 5112 are disposed at the same interval along an edge of the rotatable body 5111.

The sintering bar 5112 and the rotatable body 5111 may be coupled or separably provided by a coupling means 5113. For example, the coupling means 5113 may be provided as a bolt. That is, when the bolt is tightened, the sintering bar 5112 and the rotatable body 5111 may be coupled to each other, and when the bolt is loosened, the sintering bar 5112 and the rotatable body 5111 may be separated from each other. As a result, the maintenance may be easy, and the sintering part 510 may be assembled in various forms.

As a first example, as illustrated in FIG. 20, the sintering part 510 may be assembled by connecting two rotatable bodies 5111 to two short sintering rods 5112. That is, as illustrated in FIG. 20, it is possible to assemble the sintering part 510 having a decreasing length in a left and right direction. This may be applied by assembling the sintering part 510 to a small length when the space inside the rotating tube 110 is not large.

As a second example, as illustrated in FIG. 21, the sintering part 510 may be assembled by connecting two rotatable bodies 5111 to two long sintering rods 5112. That is, as illustrated in FIG. 21, it is possible to assemble the sintering part 510 having an increasing length in the left and right direction. This may greatly reduce the number of sintering parts 510 disposed inside the rotating tube 110.

As a third example, as illustrated in FIG. 22, the sintering part 510 may be assembled by connecting two rotatable bodies 5111 to four sintering rods 5112. When the sintering part 510 assembled as described above is applied to the rotating tube 110, the sintering property of the raw material powder may be greatly improved.

The coupling part 520 is configured to couple the sintering part 510 to the rotating tube, and in particular, the coupling part 520 may detachably couple the sintering part 510 to the rotating tube 110 to improve efficiency.

That is, the coupling part 520 includes a ring-shaped support piece 521 which is supported at one end of the rotating tube 110 and to which the sintering part 510 is coupled, and a fixing means 522 coupled to or separated from one end of the rotating tube 110.

Here, the rotatable body 5111 disposed at the outermost side of the sintering part 510 may be fixed to the coupling part 520 so that the sintering part 510 and the coupling part 520 are fixed.

The fixing means 522 may be provided as a fixing bolt that passes through the support piece 521 and is coupled to one end of the rotating tube 110.

That is, the coupling part 520 may fix the support piece 521 to the rotating tube 110 by tightening the fixing bolt, and as a result, the sintering part 510 fixed to the coupling part 520 may be fixed without moving inside the rotating tube 110. When the fixing bolt is loosened, the support piece 521 may be separated from the rotating tube 110, and as a result, the sintering part 510 together with the coupling part 520 may be separated from the inside of the rotating tube 110.

The sintering assembly having such a structure may be fixed to the rotating tube 110 or may be separated. That is, the sintering assembly may be used by coupling the sintering assemblies having various standards to the rotating tube 110 according to structural changes of the facility. As a result, ease of the structural change and the downtime may be greatly reduced.

When the sintering pieces 511 are provided in two or more, the sintering part 510 may further include an auxiliary sintering rod 512 connecting the sintering pieces 511 corresponding to each other and sintering the raw material powder disposed between the sintering pieces 511 corresponding to each other. Here, at least two auxiliary sintering rods 512 may be provided. Thus, two or more auxiliary sintering bars 512, preferably three or more sintering parts 510 may be connected to each other in a longitudinal direction, to improve usability.

The auxiliary sintering bars 512 may be coupled or separably provided by the coupling means 5113. For example, the coupling means 5113 may be provided as a bolt. That is, when the bolt is tightened or loosened, the auxiliary sintering rod 512 may be coupled to the sintering part 510, or the auxiliary sintering rod 512 may be separated from the sintering part 510.

Particularly, when viewed from one end of the rotating tube 110, the auxiliary sintering bar 512 may be disposed alternately with respect to the sintering bar 5112. That is, when the sintering rod 5112 is connected to each of upper and lower portions of the rotatable body 5111 as illustrated in FIG. 17, the auxiliary sintering rods may be connected to left and right portions of the rotatable body 5111, respectively. Thus, strength of the sintering assembly may increase, and the sintering property may be improved by generating a time difference during the sintering of the raw material powder.

The sintering rod 5112 and the auxiliary sintering rod 512 may have the same thickness and thus may be used interchangeably. Alternatively, the sintering bar 5112 and the auxiliary sintering bar 512 may have the same length. As a result, the auxiliary sintering rod 512 may be used instead of the sintering rod 5112, or the sintering rod 5112 may be used instead of the auxiliary sintering rod 512.

Therefore, the rotary kiln according to the third embodiment of the present invention includes the sintering assembly detachably coupled to the inside of the rotating tube 110. Thus, when process conditions are changed, the stirring assembly provided in the rotating tube 110 may be easily replaced, and thus, the structure of the facility may be easily changed to significantly reduce the downtime.

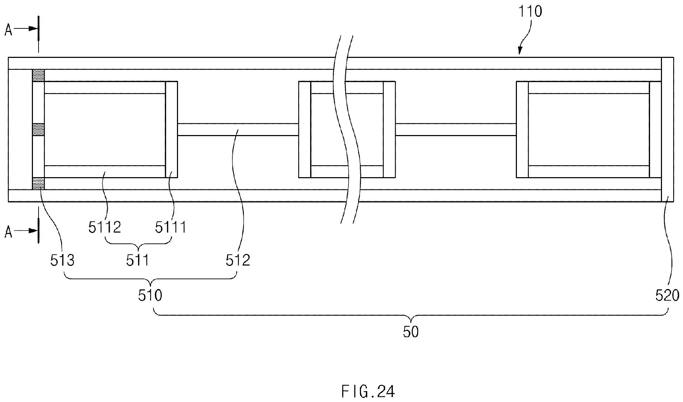

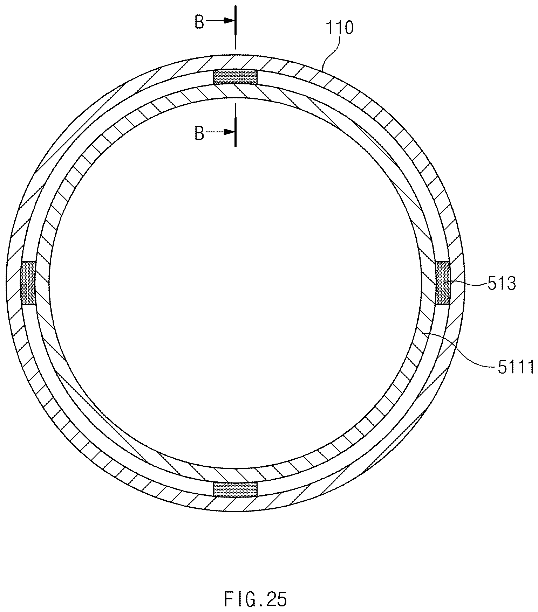

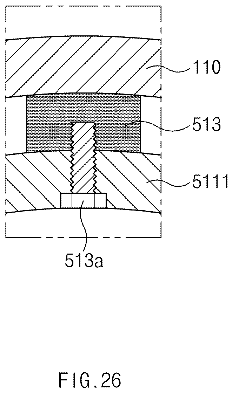

FIG. 24 is a cross-sectional view illustrating another example of the rotary kiln according to the third embodiment of the present invention, FIG. 25 is a cross-sectional view taken along line A-A of FIG. 24, and FIG. 26 is a cross-sectional view taken along line B-B of FIG. 25.

As illustrated in FIGS. 24 to 26, when the sintering part 510 includes the fixing piece 513, and the fixing piece 513 is provided with two or more sintering pieces 511, the stirring piece 511 disposed at the outermost side of the support piece 521 is fixed to an inner circumferential surface of the rotating tube 110. Thus, the sintering part 510 may be prevented from moving when the rotating tube 110 rotates.

That is, the fixing piece 513 may fix the sintering piece 511 disposed in a cantilever shape inside the rotating tube 110 to the inner circumferential surface of the rotating tube 110, and thus, when the rotating tube 110 rotates, the movement of the stirring assembly may be prevented, and as a result, the raw material powder may be stably stirred.

For example, the fixing piece 513 is disposed at least two positions between the sintering piece 511 and the inner circumferential surface of the rotating tube 110 to fix the sintering piece 511 to the inner circumferential surface of the rotating tube 110. Particularly, the fixing piece 513 may be disposed between the sintering piece 511 disposed at the outermost side of the support piece 521 and the inner circumferential surface of the rotating tube 110.

The fixing piece 513 has one end coupled to the sintering piece 511 disposed at the outermost side with respect to the support piece 521 and the other end supported on the inner circumferential surface of the rotating tube 110. That is, the fixing piece 513 may be integrated with the fixing part. Therefore, convenience of use may be improved.

The fixing piece 513 may be integrated while being coupled to the sintering piece 511 through a bolt and an adhesive. Particularly, as illustrated in FIG. 12, when the fixing piece 513 is coupled through a bolt 513a, the fixing piece 513 may be easily replaced when the fixing piece 513 is damaged, and as a result, the ease of maintenance may be improved. If the fixing piece is made of a metal material, the fixing piece may be coupled to the sintering piece through welding.

### [Rotary kiln according to fourth embodiment of the present invention]

A rotary kiln according to a fourth embodiment of the present invention is characterized by including a rotating tube made of a clad metal. That is, the rotating tube is made of a clad metal that is integrated while heterogeneous metals are fused, and thus, a bonding property of the heterogeneous metals may be greatly improved. Particularly, due to the use of the clad metal, it is possible to effectively adjust a thickness of the metal disposed at the inside or a metal disposed at the outside. For example, the thickness of the metal disposed inside the rotating tube may be minimized.

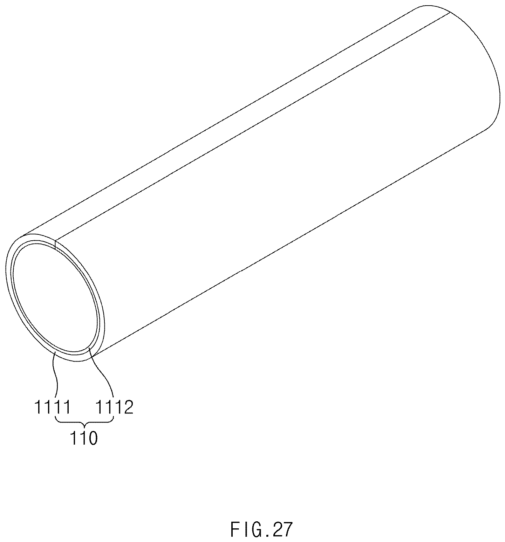

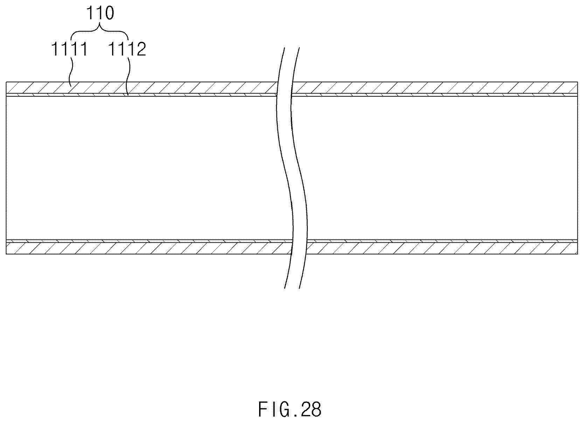

FIG. 27 is a perspective view illustrating the rotating tube of a rotary kiln according to the fourth embodiment of the present invention, and FIG. 28 is a cross-sectional view of FIG. 27.

As illustrated in FIGS. 27 and 28, the rotary kiln according to the fourth embodiment of the present invention includes a tube assembly 100 provided with a rotating tube 110 and a heating body 120.

The rotating tube 110 has a structure of mixing raw material powder while rotating in a horizontally disposed state. That is, the rotating tube 110 has a double structure including an outer metal material 1111 and an inner metal material 1112, which is provided inside the outer metal material 1111.

Here, the rotating tube 110 may have a structure made of a clad metal integrated by fusing different types of metal materials.

That is, the rotating tube according to the related art has a structure in which two metal tubes are fitted to be coupled to each other. However, the rotating tube 110 of the present invention has a structure made of a clad metal that is integrated by fusing heterogeneous metal materials, and as a result, bonding force may greatly increase.

For example, the rotating tube 110 of the present invention is manufactured by disposing two metal materials, each of which has a plate shape, fusing the metal materials to produce a clad metal, and bending the clad metal into a tube shape.

In other words, the rotating tube 110 includes an inner metal material 1112 disposed at the inside and an outer metal material 1111 disposed at the outside. Here, the inner metal material 1112 and the outer metal material 1111 may be made of clad metals that are integrated by the fusion.

The clad metal is obtained by fusing heterogeneous metals through soldering, hot pressing, etc., and thus bondability and durability of the fused heterogeneous metals may be improved.

Particularly, since the clad metal is not plated or coated, but a metal and a metal (non-ferrous metal) are pressed and welded together, the clad metal may be penetrated while destroying mutual structures to stabilize the structure itself, and as a result, the bonding between metals may be greatly improved.

Thus, the rotary kiln according to the fourth embodiment of the present invention includes the rotating tube 110 made of the clad metal integrated by fusing different types of metal materials to improve the coupling property.

The different types of metal for manufacturing the rotating tube 110 may be provided as a metal material and a non-ferrous metal material. Here, an outer metal material may be provided as the non-ferrous metal material.

Particularly, the inner metal material 1112 disposed inside the rotating tube 110 may be made of nickel (Ni) material, and the outer metal material 1111 disposed outside the rotating tube 110 may be made of stainless steel.

Thus, the rotating tube 110 includes the inner metal material 1112 made of nickel and the outer metal material 1111 made of stainless steel to prevent the raw material powder form being contaminated and also increasing in strength of the rotating tube.

The inner metal material may have a thickness less than that of the outer metal material. That is, the inner metal material is a portion that is in contact with the raw material powder, and since the inner metal material serves to prevent the contamination of the raw material powder, costs may be reduced by minimizing the thickness. In addition, the outer metal material is provided to be thicker than the inner metal material to prevent abrasion and damage due to rotation while being in contact with the rotating member and the support member.

The inner metal material 1112 may have a thickness of 1 mm to 3 mm. Here, when the inner metal material 1112 has a thickness of 1 mm or less, deformation and damage of the inner metal material may occur when the inner metal material and the outer metal material are pressed. If the inner metal material 1112 has a thickness of 3 mm or more, a large amount of nickel (Ni) material is used unnecessarily, and thus costs may greatly increase. Thus, the inner metal material 1112 may be set to a thickness of 1 mm to 3 mm to prevent the occurrence of the problem and the increase of the costs.

Thus, the rotary kiln according to the fourth embodiment of the present invention includes the rotating tube 110 made of the clad metal integrated by fusing different types of metal materials to improve coupling and manufacturing efficiency.

Hereinafter, a method for manufacturing a rotating tube will be described.

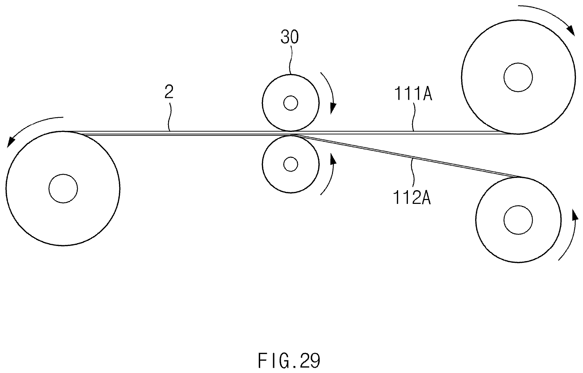

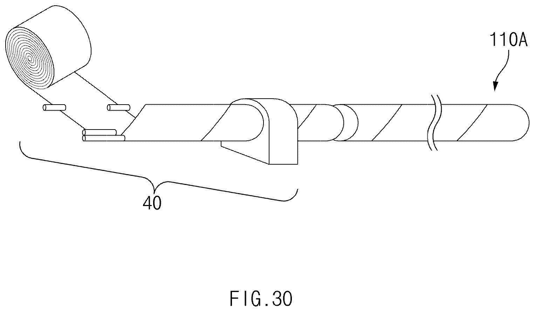

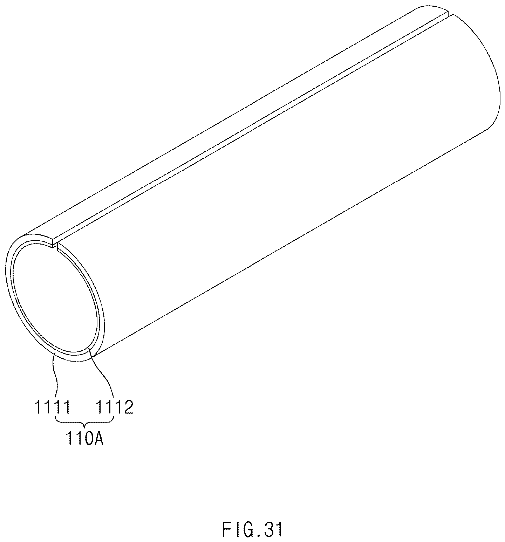

FIG. 29 is a process diagram of a fusing process in a method for manufacturing a rotating tube, FIG. 30 is a process diagram of a bending process in the method for manufacturing the rotating tube, and FIG. 31 is a process diagram illustrating another example of the bending process in the method for manufacturing the rotating tube.

The method for manufacturing the rotating tube includes a fusing process, a bending process, and a sealing process.

As illustrated in FIG. 29, in the fusing process, an integrated clad metal plate is manufactured by fusing different types of metal materials through hot pressure. For example, a metal material 112A and a non-ferrous metal material 111A are prepared as heterogeneous metal materials.

Here, the metal material 112A may be made of a nickel material, and the non-ferrous metal material 111A may be made of a stainless steel material. The prepared metal material 112A and the non-ferrous metal material 111A are pressed using a rolling roller 30. Then, as the metal material 112A and the non-ferrous metal material 111A are fused, the clad metal plate 2 may be manufactured. The metal material 112A and the non-ferrous metal material 111A may stabilize the structure itself while being penetrated while the mutual structures are destroyed during the fusion.

In the fusing process, the inner metal material of the rotating tube 110 has a thickness less than that of the outer metal material. Particularly, the inner metal material has a thickness of 1 mm to 3 mm.

When the fusing process is completed as described above, the clad metal plate 2 in which different types of metal materials are integrated may be manufactured.

In the bending process, a cylindrical rotating tube 110 is manufactured by bending the clad metal plate 2. Here, the metal material is disposed at the inside, and the non-ferrous metal material is disposed at the outside. That is, referring to FIG. 28, the inner metal material 1112 disposed inside the rotating tube is made of a nickel (Ni) material, and the outer metal material 1111, which is a non-ferrous metal material disposed outside the rotating tube, is made of a stainless steel material.

As a first example, as illustrated in FIG. 30, the clad metal plate 2 is bent into a spiral through a trimming facility 40 to manufacture an unfinished rotating tube 110A. Next, the unfinished rotating tube 110A is cut to a set size.

As a second example, as illustrated in FIG. 31, the clad metal plate 2 is bent in an O shape using a press (not shown) to manufacture an unfinished rotating tube 110A.

In the sealing process, a portion at which ends of the unfinished rotating tube 110A are in contact with each other or a corresponding portion is sealed by welding or the like. Then, a finished rotating tube 110 as illustrated in FIG. 28 may be manufactured.

Therefore, the finished rotating tube 110 is made of a clad metal in which different types of metal materials are integrated, and as a result, the bonding property may be improved, and the thickness of the inner metal material may be minimized.

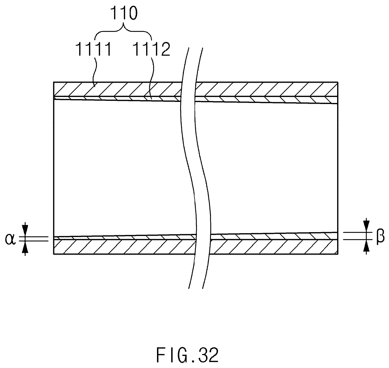

FIG. 32 is a cross-sectional view illustrating another example of the rotary kiln according to the fourth embodiment of the present invention.

As illustrated in FIG. 32, the rotary kiln according to the fourth embodiment of the present invention includes a rotating tube 110, and the rotating tube 110 is made of a clad metal in which different metal materials are integrated. Also, the heterogeneous metal materials are provided as an inner metal material 1112 and an outer metal material 1111.

Here, the rotating tube 110 is provided with an inlet into which the raw material powder is put and an outlet through which the raw material powder is discharged.

After the raw material powder is put into the rotating tube 110, a heat treatment temperature increases, and a density and weight increase. That is, the density and weight of the raw material powder disposed in the outlet more increase than those of the raw material powder disposed at the inlet, and thus, there is a problem in that deformation, abrasion and damage of the inner metal material 1112 provided at the outlet of the rotating tube 110 occur. In other words, the deformation, the abrasion, and the damage of the inner metal material occur more at the outlet than at the inlet of the rotating tube.

In order to solve the above problem, the inner metal material 1112 may be provided to gradually increase in thickness from the inlet of the rotating tube 110 (a left end of the rotating tube as illustrated in FIG. 32) to the outlet (a right side of the rotating tube as illustrated in FIG. 32). That is, a thickness β of the inner metal material 1112 disposed at the outlet of the rotating tube may be greater than a thickness α of the inner metal material 1112 disposed at the inlet of the rotating tube 110.

Thus, even if the inner metal material disposed at the outlet of the rotating tube 110 is deformed, worn, or damaged, the shape may be stably maintained.

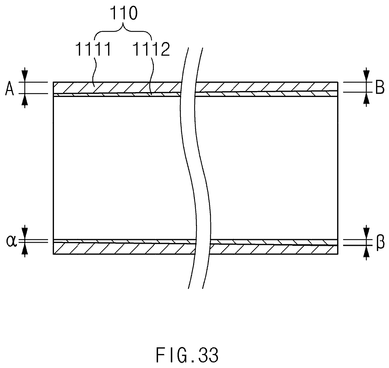

FIG. 33 is a cross-sectional view illustrating further another example of the rotary kiln according to the fourth embodiment of the present invention.

The inner metal material 1112 may be provided to gradually increase in thickness from the inlet of the rotating tube 110 (a left end of the rotating tube as illustrated in FIG. 22) to the outlet (a right side of the rotating tube as illustrated in FIG. 22). That is, a thickness β of the inner metal material 1112 disposed at the outlet of the rotating tube 110 may be greater than a thickness α of the inner metal material 1112 disposed at the inlet of the rotating tube 110.

Here, the outer metal material 1111 may be provided to gradually increase in thickness from the outlet of the rotating tube 110 (a right end of the rotating tube as illustrated in FIG. 33) to the inlet of the rotating tube 110 (a left end of the rotating tube as illustrated in FIG. 33). That is, a thickness A of the outer metal material disposed at the inlet of the rotating tube may be greater than a thickness B of the outer metal material disposed at the outlet of the rotating tube.

For example, in the outer metal material, the thickness of A is set to 4 mm, and the thickness of B is set to 3 mm, and in the inner metal material, the thickness β is set to 1 mm, and the thickness α is 2 mm. The rotating tube 110 made of a clad metal is manufactured by fusing the outer metal material and the inner metal material set as described above. Then, the thickness of the inlet of the rotating tube becomes 5 mm, and the thickness of the outlet becomes 5 mm.

Thus, it is possible to increase in thickness of the inner metal material disposed in the outlet while providing the same thickness of the inlet and the outlet of the rotating tube.

Accordingly, the scope of the present invention is defined by the appended claims more than the foregoing description and the exemplary embodiments described therein. Various modifications made within the meaning of an equivalent of the claims of the invention and within the claims are to be regarded to be in the scope of the present invention.

### [Description of the Symbols]

1: Raw material powder
2: Clad metal plate
10: Supply assembly
20: Collecting assembly
30: Rolling roller
40: Trimming facility
50: Sintering assembly
100: Tube assembly
110: Rotating tube
111: Sintering member
111a: Screw sintering piece
111b: Straight sintering piece
1111: Outer metal material
1112: Inner metal material
120: Heating body
200, 200': Temperature measuring part
210, 210': First fixing member
211: Horizontal part
2211: Horizontal rod
2212: Connection piece
2212a: Inner socket
2212b: Outer socket
222: Vertical rod
2221: Fixing piece
223: Auxiliary vertical rod
214: Fixing piece
215: Bracket
220, 220': First temperature sensor
230: First coupling member
231: First coupling piece
232: Second coupling piece
2321: Outer part
2322: Inner part
233: Pressing piece
240: Insulator
250: Detection member
260: Control member
300: Auxiliary temperature measuring part
310: 320; Second fixing member
320; Second temperature sensor
330: Second coupling member
400: Receiving part
500: Inspection part
510: Sintering part
511: Sintering piece
5111: Rotatable body
5112: Sintering rod
5113: Coupling means
512: Auxiliary sintering rod
513: Fixing piece
520: Coupling part
521: Support piece
522: Fixing means
600: Control part
700: Display part
710: First display window
720: Second display window

## Claims

1. A rotary kiln comprising:
a tube assembly provided with a rotating tube configured to rotate and heat raw material powder while rotating in a horizontally disposed state; and
a temperature measuring part provided in the rotating tube,
wherein the temperature measuring part comprises:
a first temperature sensor;
a first fixing member configured to fix the first temperature sensor to the rotating tube; and
an insulator provided between the first fixing member and the rotating tube to block heat of the rotating tube from being conducted to the first temperature sensor.

2. The rotary kiln of claim 1, wherein the first temperature sensor is provided inside the rotating tube to measure a temperature of the raw material powder.

3. The rotary kiln of claim 1, wherein the first temperature sensor is configured to measure a temperature distribution in a radial direction of an inner circumference of the rotating tube.

4. The rotary kiln of claim 2, wherein the first fixing member is provided in a shape surrounding the first temperature sensor.

5. The rotary kiln of claim 3, wherein the first temperature sensor is provided in plurality, and
the first fixing member comprises:
a pair of horizontal parts provided inside the rotating tube to extend in a longitudinal direction of the rotating tube; and
a vertical rod of which both ends are fixed to the pair of horizontal parts, respectively and in which the plurality of first temperature sensors are installed at preset intervals in the radial direction of the inner circumference of the rotating tube.

6. The rotary kiln of claim 2, wherein the temperature measuring part further comprises a first coupling member configured to fix the first fixing member to the rotating tube.

7. The rotary kiln of claim 6, wherein the first coupling member comprises:
a first coupling piece provided inside the rotating tube and coupled to a front end of the first fixing member;
a second coupling piece provided with an outer part provided outside the rotating tube and an inner part which is provided between the first fixing member and the insulator and of which a front end is coupled to the first coupling piece; and
a pressing piece disposed between the first coupling piece and the second coupling piece and configured to press the first fixing member while being deformed when the first coupling piece and the second coupling piece are coupled to each other.

8. The rotary kiln of claim 1, further comprising an auxiliary temperature measuring part configured to directly measure a temperature of the rotating tube,
wherein the auxiliary temperature measuring part comprises:
a second temperature sensor inserted into an outer surface of the rotating tube, wherein the second temperature sensor is inserted so as not to pass into the tube assembly, thereby measuring the temperature of the rotating tube; and
a second fixing member configured to fix the second temperature sensor to the rotating tube.

9. The rotary kiln of claim 8, further comprising:
a receiving part configured to receive the temperature measured by the temperature measuring part and the temperature measured by the auxiliary temperature measuring part; and
an inspection part configured to generate a defective signal when the temperature of the temperature measuring part and the temperature of the auxiliary temperature measuring part are less than or greater than a set input value.

10. The rotary kiln of claim 9, further comprising a control part configured to control a heating temperature of the rotating tube when the defective signal is generated by the inspection part so as to adjust the heating temperature so that the temperature of the temperature measuring part and the temperature of the auxiliary temperature measuring part are within the set input value.

11. The rotary kiln of claim 3, wherein the plurality of first temperature sensors are disposed in a radial direction of an inner circumference of the rotating tube to measure a temperature of the raw material powder put into the rotating tube and a temperature of a space in which the raw material powder does not exist, thereby detecting the temperature distribution.

12. The rotary kiln of claim 11, wherein the temperature measuring part further comprises a detection member configured to detect a fixing amount of raw material powder put into the rotating tube through the temperature distribution in the radial direction of the inner circumference of the rotating tube, which is detected by the plurality of first temperature sensor,
wherein the detection member is configured to detect the first temperature sensors that detect a temperature of the raw material powder in a state in which the plurality of first temperature sensors are disposed in the radial direction of the rotating tube and select input filling amount data corresponding to the detected number of first temperature sensors so as to calculate a filling amount of the raw material powder.

13. The rotary kiln of claim 1, further comprising a sintering assembly configured to sinter the raw material powder that rotates by the rotating tube,
wherein the sintering assembly comprises:
a sintering part configured to sinter the raw material powder rotating by the rotating tube; and
a coupling part configured to couple the sintering part to one end of the rotating tube,
wherein the coupling part comprises:
a ring-shaped support piece which is supported on one end of the rotating tube and to which the sintering part is coupled; and
a fixing means configured to detachably couple the support piece to one end of the rotating tube.

14. The rotary kiln of claim 13, wherein the sintering part comprises one or more sintering pieces configured to sinter the raw material powder,
wherein the sintering pieces comprise:
two or more rotatable bodies provided at a reset interval; and
a sintering rod configured to connect the rotatable bodies corresponding to each other and sinter the raw material powder rotating by the rotating tube.

15. The rotary kiln of claim 14, wherein each of the rotatable bodies has a diameter less than that of an inner circumferential surface of the rotating tube so as not to be supported on the inner circumferential surface of the rotating tube.

16. The rotary kiln of claim 14, wherein, when two sintering pieces are provided, the sintering part further comprises an auxiliary sintering rod configured to connect the sintering pieces corresponding to each other and sinter the raw material powder disposed between the sintering pieces corresponding to each other.

17. The rotary kiln of claim 1, wherein the rotating tube is made of a clad metal that is integrated by fusing heterogeneous metals.

18. The rotary kiln of claim 17, wherein the heterogeneous metal materials comprise a metal material and a non-ferrous metal material.

19. The rotary kiln of claim 17, wherein the heterogeneous metals comprise an inner metal material disposed inside the rotating tube and an outer metal material disposed outside the rotating tube,
wherein the inner metal material has a thickness less than that of the outer metal material.

20. The rotary kiln of claim 19, wherein the rotating tube is provided with an inlet through which the raw material powder is input and an outlet through which the raw material powder is discharged, and
the inner metal material has a thickness that gradually increases from the inlet to the outlet of the rotating tube.
